(19) Europäisches Patentamt
European Patent Office
Office européen des brevets

(11) **EP 2 420 902 A2**

(12) **EUROPEAN PATENT APPLICATION**

(43) Date of publication:
22.02.2012 Bulletin 2012/08

(51) Int Cl.:
*G04G 7/02* (2006.01)    *H04B 7/212* (2006.01)
*H04J 3/06* (2006.01)

(21) Application number: 11075188.0

(22) Date of filing: 04.08.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 05.08.2010 IT MI20101504

(71) Applicant: **Digital Instruments Srl.**
20131 Milano (IT)

(72) Inventor: **Genova, Marco**
20131 Milano (IT)

(74) Representative: **Riccardi, Sergio**
IPSER S.r.l.
Via M. Melloni 32
20129 Milano (IT)

(54) **System for synchronizing signals on a telecommunication network**

(57)    A signal system synchronization for telecommunication networks comprises a reference signal source providing a reference signal to one or more master devices arranged and configured for two-way satellite communication and transmitting through said satellite said reference signal to a number of slave devices. Said slave device are arranged and configured for one-way only satellite communication and provided with information about its position, position of said master device and satellite position; advantageously each slave device locally regenerates the received satellite signal on the basis of propagation delay between master and slave devices and relative delay occurring between satellite to master device signal and satellite to slave device signal. The regenerated received signal is therefore synchronous with said reference signal.

Fig. 2

**Description**

The present invention relates to an alternative system for synchronizing signals on a telecommunication network.

The concept of transmission of a synchronization signal from or via satellite (including GPS) is not new. Several documents discloses the above matter, such as "Clock synchronization from satellite tracking," D. W. Hanson and W. F. Hamilton, IEEE Transactions on Aerospace and Electronic Systems, vol. 7, no. 5, Sep. 1971, pp. 895-899 and "GPS: Primary tool for time transfer," W. Lewandowski, J. Azoubib & W. J. Klepczynski, Proc. IEEE, vol. 87, no. 1, Jan. 1999. However, two-way timing transfers capable of high accuracy were generally only possible by co-ordination amongst specialised national timing centres and do not provide a timing signal in real-time as in "Two-way time transfer via communication satellites," D. Kirchner, Proc. IEEE, vol. 79, no. 7, July 1991, pp. 983-990. One-way systems developed previously either do not provide the requisite accuracy in real time (see "One-way time transfer using geostationary satellite TDF2," F. Meyer, IEEE Transactions on Instrumentation and Measurement, vol. 44, no. 2, Apr. 1995, pp. 103-106) or due to the computational load of the orbital calculations (see "Geostationary orbit determination for time synchronization using analytical dynamic models," J-C. Yoon, K-H. Lee, B-S. Lee, BY. Kim, K-H Choi, Y-K. Chang, Y-S. Chun and S-W. Ra, IEEE Transactions on Aerospace and Electronic Systems, vol. 40, no. 4, Oct. 2004, pp. 1132-1146), requiring ephemerid data provided by satellite operators, thus limiting the scope of implementation to national institutions as in "Satellite broadcasting of time and frequency signals," A. S. Gupta, A. K. Hanjura, and B. S. Mathur, Proc. IEEE, vol. 79, no. 7, July 1991, pp. 973-981. However, due to improvements in technology, there are now proposals for affordable two-way (see W. Schäfer, "Method and device for synchronisation of distant clocks to a central clock via satellite," US Patent no. 7,327,699, Feb. 5, 2008) and satellite based systems (reference can be made to . Grimoldi, "ANTARES: distribuzione tempo/trequenza," CGS S.p.A, presented at DTT, Roma). The novelty of the present invention is to provide a synchronization signal to a receive-only (one-way) user by making use of two-way communication in a limited number of master stations to estimate and compensate for the satellite position in real time, thus meaning that an user does not need to be able to transmit and a system does not have to be placed onboard a satellite.

In accordance with migration to the digital terrestrial television system, there were developed highly performing solutions, that meet any requirement of broadcaster and system integrator in such field. Among the more successful products, the GPS-DS-8, GPS-SU-8, GPS-DR-6 e GPS-LC-8 apparatuses developed by the Applicant can be listed.

All of those apparatuses are multiple-output time-frequency reference signal generators (PPS, 10 MHz) having high stability and being GPS referenced. GPS has reached such accuracy as to result the best instrument for signal control, assuring a tested reliability; on the contrary the system is managed by the United States Department of Defence, and as such, subject to technical and geopolitics risks. Entrusting a technology being directly or indirectly more and more present in an increasing number of everyday life fields to an unique agency involves a real risk, therefore it becomes necessary to have suitable alternatives at our disposal.

In the research of GPS alternatives, some analogous projects, proposed by the main powers of the world, exist: European Union is developing GALILEO, the Russian Federation is restoring and updating GLONASS, and the emerging Asiatic powers such as China and India are developing BeiDou and IRNSS, respectively. All of those systems, even if theoretically have highest potentialities, since they are based on GPS and its gained experience, integrated by multiple researches and developments achieved during years in universities and research centres all over the world, they are not yet able to offer themselves as alternatives, and probably they will not even for some more years.

Nowadays, the alternative more able to combine the operation efficiency, the quickness of setup and the costs is the satellite, since is widely common and able to cover integrally the region.

In order to solve such problem, the Applicant has developed the system of the present invention which aims to assure the synchronization of the signals through satellite, alongside the conventional technology.

For this purpose, the apparatus named GPS-MXS has been designed, which is a device able to combine the previously developed GPS-based technology and alternative sources such that the operation of the time-frequency signals needed for synchronization of signals of a network such as the SFN (Single Frequency Network) of the digital terrestrial television, can be assured in any case.

The GPS-MXS apparatus has been realized as efficient measure instrument for validating reference signal transfer systems alternative to GPS, functioning based on algorithms which define the apparatus such that it provides information regarding the quality of time-frequency signals over the region, by acquisitions compared to high stability GPS signals.

The GPS-MXS provides four different inputs for four types of source, and currently a fifth type is being realized on the basis of a satellite receiver:

GPS: the conventional source, and till now used more generally for synchronization operations.
External Reference (Ext): supports different types of time signal (1 PPS) and frequency signal (1 MHz, 2 MHz, 2.048 MHz, 5 MHz, 10 MHz) which can be independently provided. Such inputs can be provided with signals coming from high precision clocks such as Caesium, Rubidium or MASER, depending on network type.

IEEE 1588: Frequency and time reference transferred through Ethernet network; in currently given the complexity of standard IEEE 1588 networks, this technology is considered to be developed in the future, even if the apparatus is just designed for this purpose.

E1/T1: such signal, standardized at the European Conference of Postal and Telecommunications (CEPT) and successively adopted by the International Telecommunication Union Telecommunication Standardization Sector (ITU-T), functions with the nominal value of 2.048 Mbps and is widely used in digital telecommunications all over the world but Japan. It is a easily transferrable signal over SDH networks and the field experience has shown a good availability in the main transmission centres of such reference. In particular, the GPS-MXS apparatus is able to insert time references into E1/T1 streams both as chain head and in slave mode. Not least, such methodology is considered highly usable after the good results achieved by experimentation of the time-frequency signal transferability with the above mentioned standard.

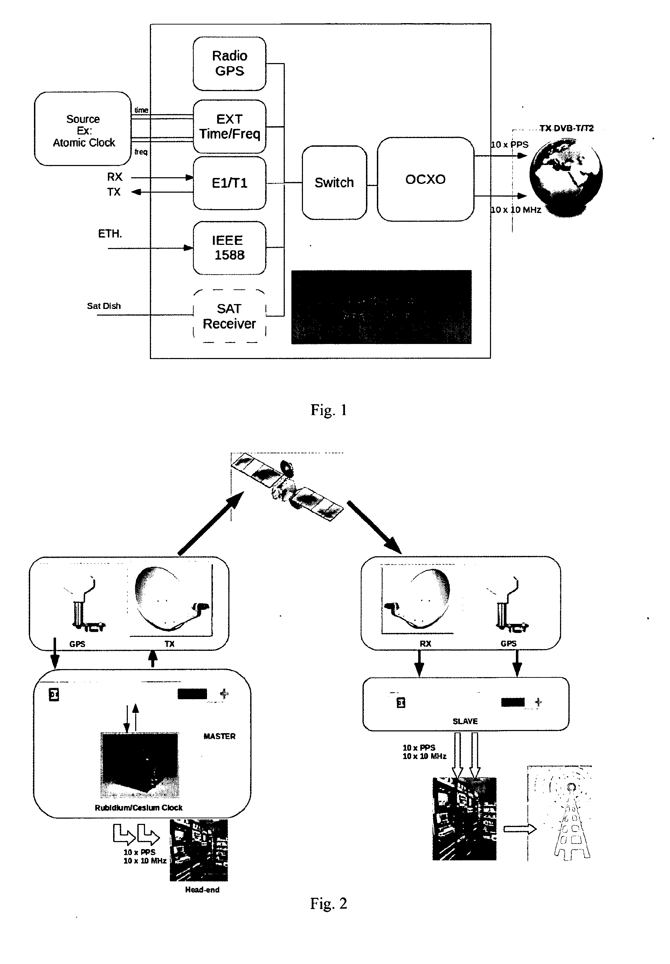

The latter is further used as communication standard for broadcasting synchronization from an apparatus connected with a high quality source (possibly GPS, or Caesium/Rubidium atomic clock), used as Master, to other apparatuses spread on the region (Slave). The operation scheme of the GPS-MXS apparatus is shown in Fig. 1 of the annexed drawings.

Further feature of the GPS-MXS is the option to characterize the quality of the sources provided as inputs of the apparatus through the analysis of the ratio $\Delta f/f$ (variation of the frequency value divided by the nominal frequency) of each source. Anyway, the device results as a measure instrument able to be remotely controlled by web-based and/or SNMP applications. This feature is extremely useful during setup and checking of the transferability of the GPS alternative signals.

Statistical analysis and corresponding distributions, transit time, time variance and many other applications, are implemented as default, allowing the user the opportunity to choose and consider in detail the actual transfer feasibility.

GPS-MXS will be the main instrument for realizing a system for receiving/transmitting signals over satellite, currently under test and checking at the Applicant, since it has gained good results in terms of time-frequency signal transfer over E1/T1 streams. The Applicant has further perfected an alternative system through use of satellite technology; with regards to such purpose, given the availability of satellite modulation/demodulation (MODEM) systems in the telephonic field, it has been considered to the E1/T1 signalling over satellite, but since it requires a great bandwidth, alternative systems are studied in order to obtain analogous results, but having less capacity streams.

In this step, the signal generated by the device is treated by a MODEM being among the most performing available on the market, so as to perform the satellite uplink between the teleport and the satellite. In this way the signal governing the GPS-MXS devices in the region operating in slave mode and intended to manage the transmitting locations could be synchronized and controlled.

It is important to point out the Applicant choice to provide a teleport, which is an instrument necessary for performing a suitable research and development, free from dependence on third party and, eventually, to be able to offer a viable and in this filed specialized synchronization service to firms and radio/television networks which need it.

Given the strategic importance of the isochrones networks, the Applicant is provided with satellite technology in order to optimize the hardware needed and sufficient for time-frequency signal transfer. In this regard it has been considered to integrate the satellite receiver part inside the GPS-MXS, providing the latter with the fifth input usable as synchronization signal. The operating principle of the system of the present invention is shown in Fig. 2 of the annexed drawings.

There is provided later the integration of a modulation/demodulation system inside the devices intended for reception so as to assure their self-sufficiency, while keeping high performances but having reasonable costs in respect of the current market condition.

According to all above disclosed, main object of GPS-MXS is to allow a network synchronization extremely reliable in a region which can be even of not small dimensions. A network not suitably designed and having technologic weakness, independently from the good quality of the synchronization signals, can lead to disastrous results, such as a condition of dark in a residential area with million people (just think about a case in which a technical issue of such kind involves even a portion of the Lombardy). Therefore it becomes necessary to synchronize efficiently the transmitters located on the region. The satellite is considered the instrument suitable for this operation. It is provided the use of *Hotbird (13 E)* and *Atlantic Bird 3 (5 W)* satellites of the French operator Eutelsat.

In this way, the master apparatus will align over satellite the slave devices in the region, following an accurate study of the propagation signal time. GPS-MXS has been designed so as to be able to generate the PPS signal in different moments, depending on the time taken by the signal to go from master to slave. Since there are noticeable changes in the orbital position of satellites, it needs to design a frequency-locked loop system, and then time-locked, in order to adjust the variable time changes.

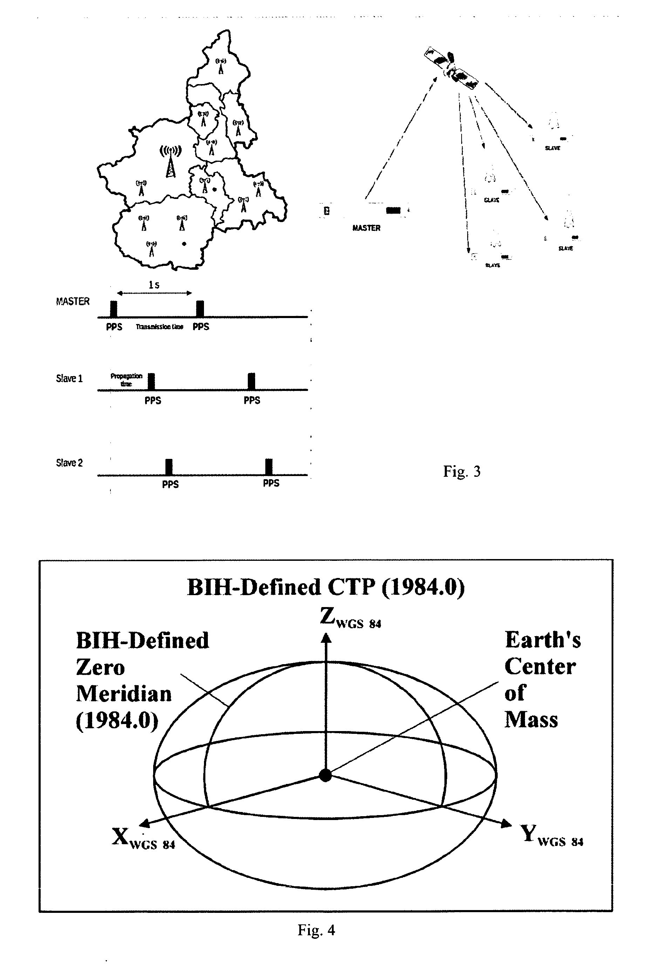

In Fig. 3 of the annexed drawings there is shown an example of network in regional scale, in which a master plant (MASTER) and multiple secondary plants (SLAVE) can be seen. The Master PPS synchronization signal is phase - or time position - controlled by a system analogous to the PPL, which takes account of the changes in the satellite position, receiving itself as reference signal, comparing the propagation delay in real-time. By referencing the main PPS signal also secondary PPS signals spread in the region will be referenced, that clearly will start in different moments in respect of master, due to geographical distance therefrom.

In order to determine as accurately as possible the propagation delay of signals between master location and the multiple slave locations, it will be necessary to take delay causes and intrinsic and environmental errors such estimation involves into account.

On the basis of ephemeris data collected during July 2010, kindly provided by Eutelsat, there has been the opportunity to estimate the geometric distances through satellite between some Italian cities, by taking its position change into account, at a rate of 30 minutes.

In such way, once computed the travel time relative to the uplink and downlink, it was possible to verify the consistency of the obtained values, in absolute accordance with the theoretic forecast, obtained by particularly sophisticated estimations using th World Geodetic System - 1984 (WGS84) - mathematical model, which consider the actual shape of the terrestrial geoid (see Fig. 4).

It comprises:

> Origin → Earth centre of mass
> Z axis → Conventional Terrestrial Pole direction (CTP)
> X axis → Intersection of Greenwich reference meridian with equator
> Y axis → Axis perpendicular to ZX plane and passing through Asian continent

In order to perform calculation about distances between points a conversion from spherical coordinates (latitude Φ, longitude λ e height h) into Cartesian system (X, Y, Z) has been therefore carried out by following formulas:

$$\begin{cases} X = (v+h)\cos\phi\cos\lambda \\ Y = (v+h)\cos\phi\sin\lambda \\ Z = (v(1-e^2)+h)\sin\phi \end{cases}$$

being

$$v = \frac{a}{\sqrt{1-e^2\sin^2\phi}}$$

$$a = 6378137,0$$

$$e^2 = 0,006694380$$

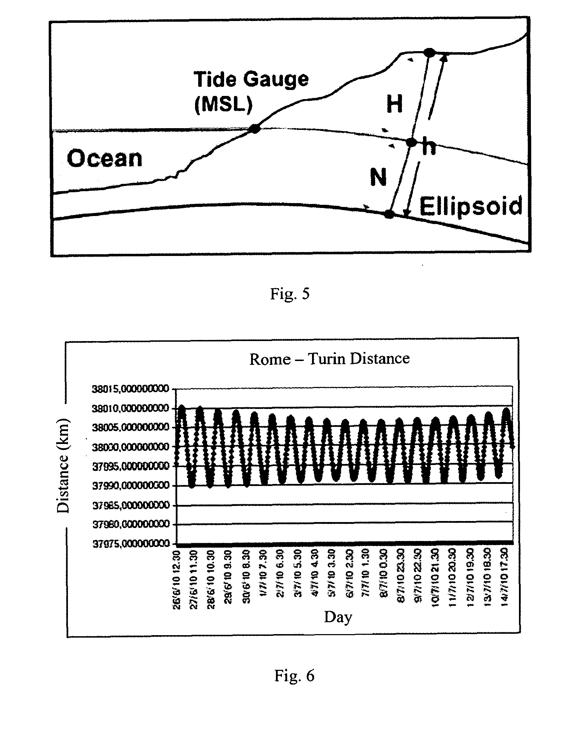

in which parameter a is the semi-major axis, e is the flattening factor and h is the point height from the ellipsoid which for simplicity sake will be corresponded to the height H in respect of the geoid since it is negligible in calculations (see Fig. 5).

In the following it will be necessary to treat with suitable techniques and experimental data the errors mainly due to:

- Errors of ephemeris estimation.
- Relativistic errors among which the main one is Sagnac effect due to earth rotation.
- Atmospheric errors: it is generally matter of further studies the interaction between the signals and troposphere and ionosphere. Assuming that the transmission frequencies will range between 12 and 14.2 GHz, in regards of the first one, they are however too low for the propagation to be considered not dispersive, whilst in regards of the second one, they are enough high to interact with free electrons being therein, due to length of the wave thus leading to refractive effects. The latter can be possibly compensated by a higher signal power but such case have not been suitably studied yet.

- Errors due to the transmitter and receiver resolution and noise of PLL - Phase Locked Loop and DLL - Delay Locked Loop.
- Electromagnetic errors due to multipath effect.
- General statistic errors from distance evaluation.

On the basis of what listed, studies for developing methodologies needed to carry out an accurate estimation of the above errors are ongoing, in order to synchronize signals while assuring a high efficiency of the devices.

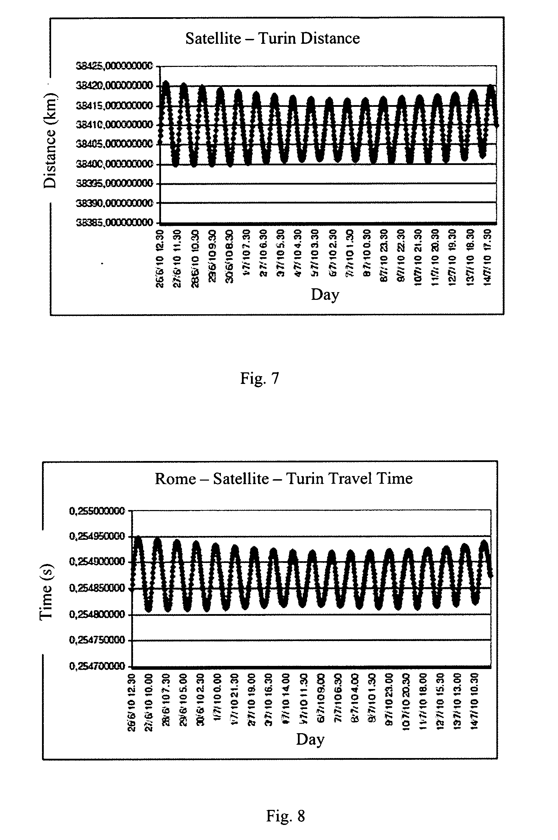

At present, on the basis of the printout ephemeris values, approximated estimations have been carried out with reference to Rome and Turin, which have generated plots shown in Figs. 6-10 below.

First two plots in Figs. 6, 7 and 8 relate to distances between each downtown and the satellite position calculated point-by-point with acquisition time of 30 minutes from 26 of June to 14 of July, 2010. By analyzing the history present within the website of Eutelsat (in section accessible only by operators of terrestrial network), it can be noticed how in the same time periods generally different estimations showing even quite important variations from one another are performed.

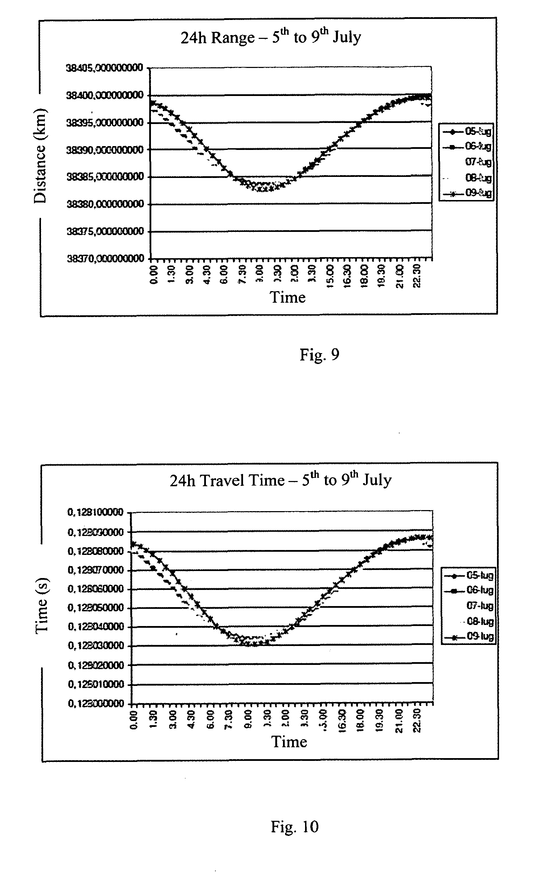

In the next plot of Fig. 9, an estimation of the distance between satellite and Applicant's headquarters during a day for four successive days have been performed. Its trend is clearly of the sinusoidal type.

In the last plot of Fig. 10 time values regarding the travel time of the signal from the Applicant's location to satellite are instantaneously plotted. The daily variation is under 100 $\mu$s, a value easily treatable in real-time with electronics of GPS-MXS.

Once placed the devices in the desired locations, it will be necessary to treat the synchronization signal while taking two of the features of the same into account: the distributive one and the regenerative one of the original.

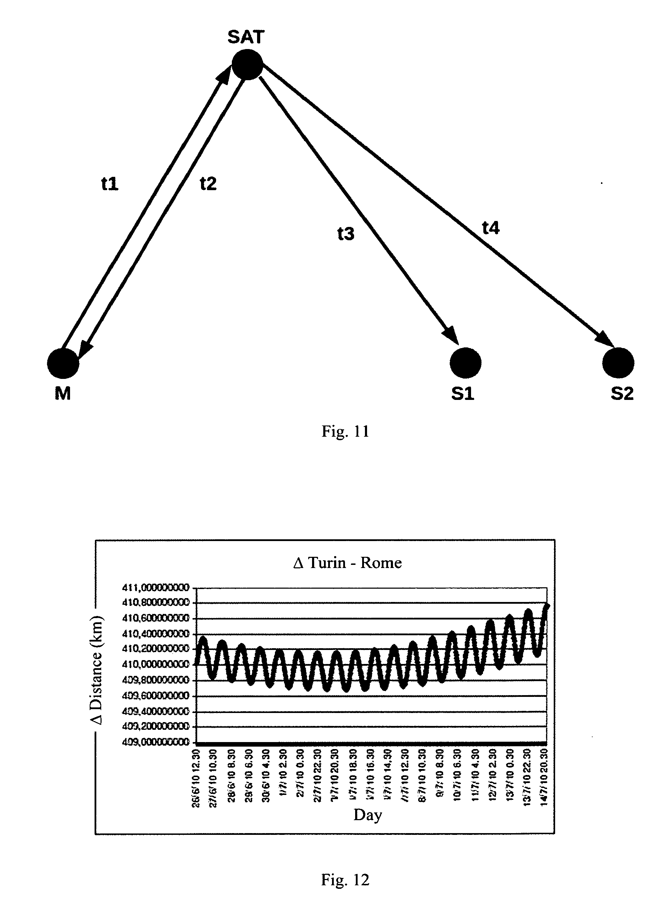

In regards of the first, the propagation delay relative to a predetermined point would be considered. To fix ideas, Fig. 11 of the annexed drawings can be considered, which summarizes the path of the signal from master to slave.

In terms of network, the relative time, that is the difference in time taken by signal to reach a reference master and the different slaves results absolutely important. The communication time between master and satellite (round path) is herein neglected.

In respect of the master:

$$t_0\big|_{\Delta=0} = t_1 + t_2 = t_M$$

whilst in respect of the slave systems on the region (two in the example):

$$t_{s1} = t_1 + t_3$$

$$t_{s2} = t_1 + t_4$$

from which, depending on the satellite position:

$$\Delta t_{s1} = t_{s1} - t_M$$

$$\Delta t_{s2} = t_{s2} - t_M$$

In such way, the absolute time can be considered as sum of a static term, evaluated by statistical operations about satellite mean position and the relative dynamic correction, evaluated in real-time (fine delay):

$$t_A = t_S + t_D$$

By analyzing a case study, based on analysis carried out by the Applicant, it is assumed that from Rome a satellite transmission is being performed. The signal, once reached the satellite, is sensed on the ground by the original teleport (Rome) at time to and at the receiving site placed in Turin at time $t_3$.

It is therefore desired how the difference of these two measures t = $t_3$ - t1 changes during time depending on the satellite movements.

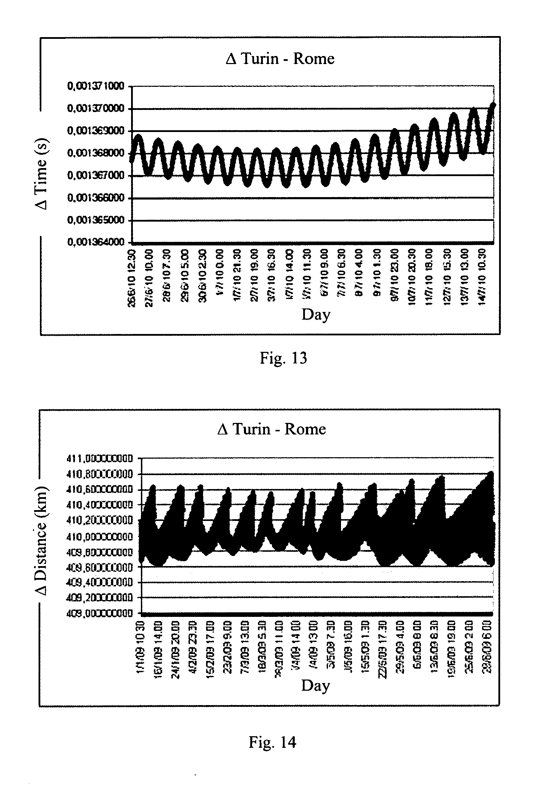

In the next two plots of Figs. 12 and 13 such estimation can be seen in terms of distance (km) and time (s), respectively.

By reprocessing data in Applicant's possession it can be stated that such estimation varies in a range of 4 $\mu$s, which corresponds to about 1 Km, during the considered reference period of three weeks.

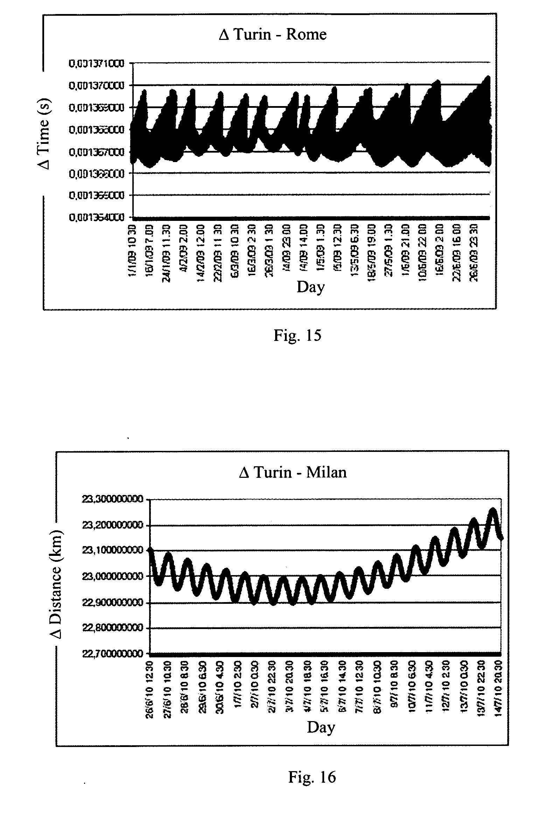

Such data are also confirmed even by a longer acquisition of six months as can be seen from plots in Figs. 14 and 15.

By moving the teleport from Rome to Milan the variation in the distance difference is reduced to 400 metres, as shown in Fig. 16.

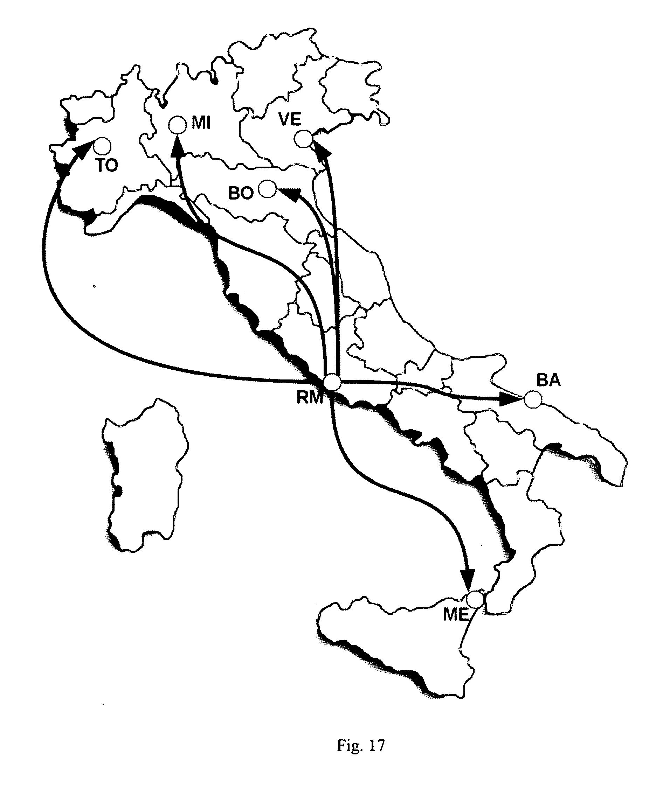

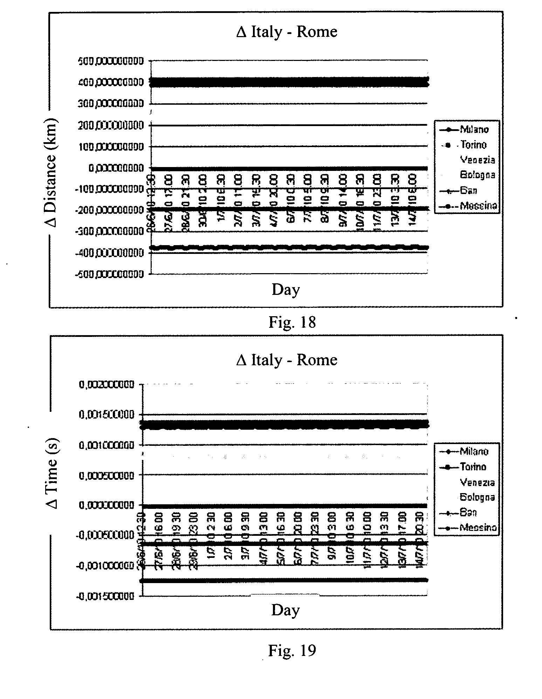

With regards to simulation of the network which will be after implemented on national scale there are analyzed, besides Rome, considered as network centre and therefore master location, other six Italian cities in different positions both by latitude and longitude: Milan, Turin, Venice, Bologna, Bari and Messina, as shown in the geographical map of Fig. 17 and by the plot estimations of Figs. 18 e 19.

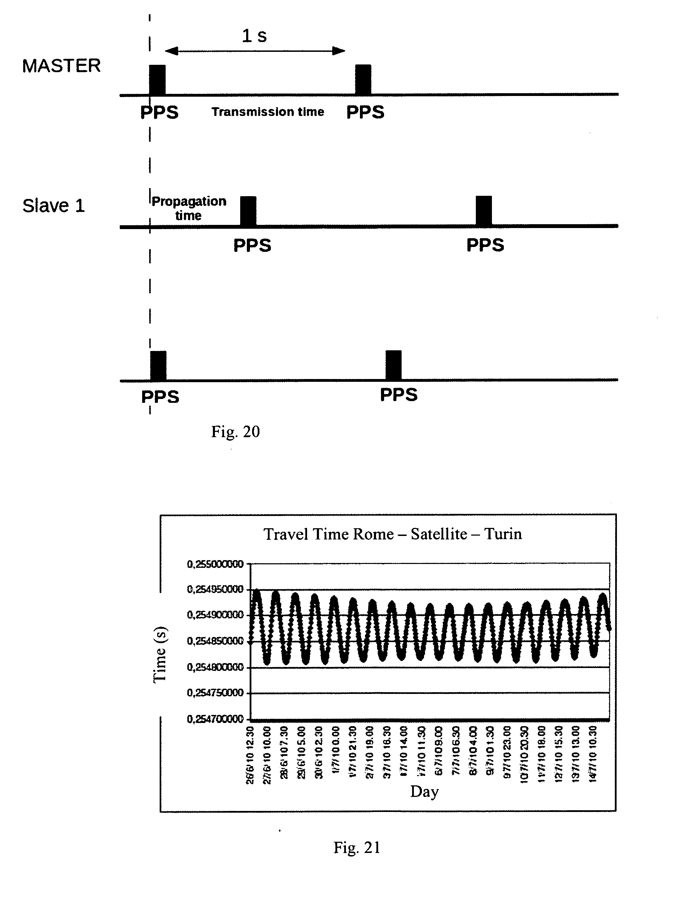

In order to reconstruct and regenerate the original PPS signal is further necessary to know the total signal travel time from teleport to receiving site. In such way there will be the opportunity to locally regenerate a PPS signal being synchronous to the one initially distributed and to the ones possibly just available in place (see Fig. 20).

In the plot of Fig. 21 there is shown the travel time of a signal sent from Rome to Turin over satellite.

From the plot it can be noticed how such delay varies daily in a window of 150 $\mu$s.

To such latency it will be necessary to add modulation and demodulation times introduced downstream and upstream of the transmission and other possible fixed delays a priori determinable.

In order to calculate the travel time each apparatus needs to know its own geographical position, the teleport and the used satellite ones. Some information will be updated in real-time over-the-air in order to react to the changes of the dynamic structure of the network (for example, a teleport change, or update of the satellite position).

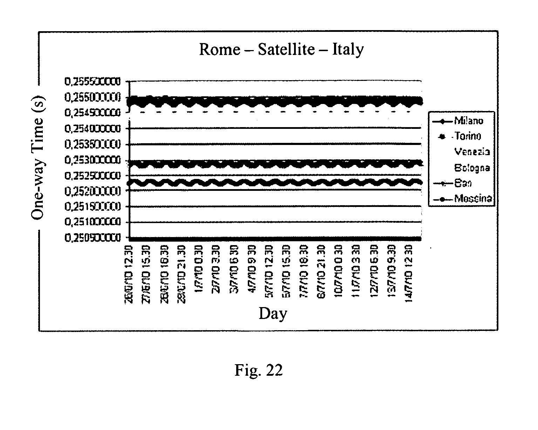

In Fig. 22 the travel times regarding the cities above identified as relevant are plotted. In the plot it possible to notice that from a northern city such as Milan to a southern such as Messina there is a difference in absolute terms of about 3 ms.

It can be useful to summarize in the table some of the values above described.

In the following there are then reported the travel times of the signal from teleport to satellite and from satellite to the various cities. For each path there are shown the values maximum, mean and medium depending on satellite movement.

| Path | Distance (Km) | Time ($\mu$s) | $\Delta$teleport (Km) | $\Delta$teleport ($\mu$s) |
|---|---|---|---|---|
| **Roma - SAT** | 38010,455154 | 126789 | | |
| | **37999,593629** | **126753** | | |
| | 37989,973301 | 126721 | | |
| **SAT - Bresso** | 38403,149283 | 128099 | 392,970342 | 1311 |
| | **38392,002990** | **128062** | **392,409361** | **1309** |
| | 38382,084435 | 128029 | 392,035213 | 1308 |
| | 38397,795647 | 128081 | 387,618341 | 1293 |
| **SAT - Milan** | **38386,654119** | **128044** | **387,060491** | **1291** |
| | 38376,741841 | 128011 | 386,690843 | 1290 |
| | 38420,795336 | 128158 | 410,765962 | 1370 |
| **SAT - Turin** | **38409,673178** | **128121** | **410,079549** | **1368** |
| | 38399,814363 | 128088 | 409,681872 | 1367 |
| | 38292,763988 | 127731 | 282,410946 | 942 |
| **SAT - Venice** | **38281,641243** | **127694** | **282,047614** | **941** |
| | 38271,693801 | 127661 | 281,511457 | 939 |
| | 38248,125791 | 127582 | 237,757577 | 793 |
| **SAT - Bologna** | **38237,065920** | **127545** | **237,472291** | **792** |
| | 38227,216253 | 127512 | 237,196583 | 791 |
| | 37818,521468 | 126149 | -191,570574 | -639 |
| **SAT - Bari** | **37807,758974** | **126113** | **-191,834655** | **-640** |
| | 37798,166663 | 126081 | -192,401363 | -642 |
| | 37632,710292 | 125529 | -376,981240 | -1257 |

(continued)

| Path | Distance (Km) | Time ($\mu$s) | $\Delta$teleport (Km) | $\Delta$teleport ($\mu$s) |
|---|---|---|---|---|
| SAT - Messina | 37622,178516 | 125494 | -377,415112 | -1259 |
| | 37612,902651 | 125463 | -378,067695 | -1261 |

The time variation of the difference in the signal propagation among the various cities has been then compared.

| $\Delta$ (Km) | Torino | Milano | Venice | Bologna | Roma | Bari |
|---|---|---|---|---|---|---|
| Torino | | | | | | |
| Milano | 0,361299352 | | | | | |
| Venice | 0,914010790 | 0,557811783 | | | | |
| Bologna | 0,592209389 | 0,417043987 | 0,413485165 | | | |
| Roma | 1,084090057 | 0,927497836 | 0,899489108 | 0,560994577 | | |
| Bari | 1,902436858 | 1,741333729 | 1,297789731 | 1,324289741 | 0,830789726 | |
| Messina | 2,167457680 | 2,013952828 | 1,681419700 | 1,614852649 | 1,086454992 | 1,034403813 |
| A ($\mu$s) | Torino | Milano | Venice | Bologna | Roma | Bari |
| Torino | | | | | | |
| Milano | 1,205164916 | | | | | |
| Venice | 3,048811821 | 1,860659827 | | | | |
| Bologna | 1,975397889 | 1,391109003 | 1,379238050 | | | |
| Roma | 3,616135189 | 3,093799765 | 3,000372706 | 1,871276486 | | |
| Bari | 6,345846293 | 5,808464097 | 4,328960573 | 4,417355094 | 2,771216233 | |
| Messina | 7,229860600 | 6,717823529 | 5,608612409 | 5,386568628 | 3,624023764 | 3,450399720 |

From the preceding detailed description of the system it is clear that it overcomes brilliantly the problem of distribution and regeneration of reference time-frequency signals without using GPS thus providing a certainly useful instrument for radio and television broadcasters which need to be able to have at their disposal the greatest possible certainty in network synchronization.

**Claims**

1. A system of synchronization of signals on a telecommunication network, comprising:

   (i) a reference signal source providing a reference signal to
   (ii) at least one master device suitable for two-way satellite communication and transmitting through said satellite said reference signal to,
   (iii) slave devices for one-way only satellite communication,
   **characterized by** locally regenerating the received signal at each slave device on the basis of propagation delay between said at least one master and slave device and relative delay occurring between satellite to master device signal and satellite to slave device signal, the regenerated received signal thus being synchronous with said reference signal.

2. The system of synchronization according to claim 1, wherein each slave device is provided with information about its position, position of said at least one master device and satellite position.

3. The system of synchronization according to one or more preceding claims, wherein said satellite position is evaluated by ephemeris data.

4. The system of synchronization according to one or more preceding claims, wherein information about position of said at least one master device and satellite position are updated, preferably over the air, by said at least one master device.

5. The system of synchronization according to one or more preceding claims, wherein said relative delay accounts at least a gross delay related to evaluated satellite position and a fine delay related to slave device position relative to said evaluated satellite position.

6. The system of synchronization according to one or more preceding claims, wherein said relative delay also accounts errors of ephemeris estimation and/or Sagnac effect errors and/or atmospheric errors and/or device resolution and noise errors and/or multipath effect errors.

7. The system of synchronization according to one or more preceding claims, wherein said at least one master device is the GPS-MXS device operating in master mode.

8. The system of synchronization according to one or more preceding claims, wherein said slave device is the GPS-MXS device operating in slave mode.

9. The system of synchronization according to one or more preceding claims, wherein said reference signal source is an atomic clock.

10. The system of synchronization according to one or more preceding claims, wherein said reference signal source provides an E1/T1 signal.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Fig. 17

Fig. 18

Fig. 19

Fig. 20

Fig. 21

Fig. 22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7327699 B

### Non-patent literature cited in the description

- **D. W. HANSON ; W. F. HAMILTON.** Clock synchronization from satellite tracking. *IEEE Transactions on Aerospace and Electronic Systems,* September 1971, vol. 7 (5), 895-899
- **W. LEWANDOWSKI ; J. AZOUBIB ; W. J. KLEPCZYNSKI.** GPS: Primary tool for time transfer. *Proc. IEEE,* January 1999, vol. 87 (1
- **D. KIRCHNER.** Two-way time transfer via communication satellites. *Proc. IEEE,* July 1991, vol. 79 (7), 983-990

- **F. MEYER.** One-way time transfer using geostationary satellite TDF2. *IEEE Transactions on Instrumentation and Measurement,* April 1995, vol. 44 (2), 103-106
- **J-C. YOON ; K-H. LEE ; B-S. LEE ; BY. KIM ; K-H CHOI ; Y-K. CHANG ; Y-S. CHUN ; S-W. RA.** Geostationary orbit determination for time synchronization using analytical dynamic models. *IEEE Transactions on Aerospace and Electronic Systems,* October 2004, vol. 40 (4), 1132-1146
- **A. S. GUPTA ; A. K. HANJURA ; B. S. MATHUR.** Satellite broadcasting of time and frequency signals. *Proc. IEEE,* July 1991, vol. 79 (7), 973-981